(19) Europäisches Patentamt
European Patent Office
Office européen des brevets

(11) Veröffentlichungsnummer: **0 023 712**
**B1**

(12) # EUROPÄISCHE PATENTSCHRIFT

(45) Veröffentlichungstag der Patentschrift: **09.03.83**

(21) Anmeldenummer: **80104556.8**

(22) Anmeldetag: **01.08.80**

(51) Int. Cl.³: **C 08 F220/58**, C 08 F226/02, C 08 F220/56, C 09 K 7/02 // (C08F220/58, 226/02, 220/56),(C08F226/02, 220/58, 220/56),(C08F220/56, 220/58, 226/02)

(54) **Wasserlösliches Copolymerisat, Verfahren zu seiner Herstellung und seine Verwendung.**

(30) Priorität: **06.08.79 DE 2931897**

(43) Veröffentlichungstag der Anmeldung: **11.02.81 Patentblatt 81/06**

(45) Bekanntmachung des Hinweises auf die Patenterteilung: **09.03.83 Patentblatt 83/10**

(84) Benannte Vertragsstaaten: **AT DE FR GB IT NL SE**

(56) Entgegenhaltungen:
**DE A 2 444 108**
**FR A 2 247 478**
**GB A 1 082 016**
**US A 3 929 741**

(73) Patentinhaber: **CASSELLA Aktiengesellschaft**
**Hanauer Landstrasse 526**
**D-6000 Frankfurt am Main 61 (DE)**

(72) Erfinder: **Engelhardt, Friedrich, Dr.**
**Hünfelder Strasse 20**
**D-6000 Frankfurt am Main 61 (DE)**
Erfinder: **Riegel, Ulrich**
**Steinäckerstrasse 6**
**D-6000 Frankfurt am Main 61 (DE)**
Erfinder: **Hille, Martin, Dr.**
**In den Eichen 46**
**D-6237 Liederbach 1 (DE)**
Erfinder: **Wittkus, Heinz**
**Manderscheiderstrasse 9**
**D-6000 Frankfurt am Main (DE)**

(74) Vertreter: **Urbach, Hans-Georg, Dr. et al**
**Hanauer Landstrasse 526**
**D-6000 Frankfurt am Main 61 (DE)**

**EP 0 023 712 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Wasserlösliches Copolymerisat, Verfahren zu seiner Herstellung und seine Verwendung.

Die vorliegende Erfindung betrifft ein neues wasserlösliches Copolymerisat, das in statistischer Verteilung zu

5 bis 95 Gew.% aus Resten der Formel I

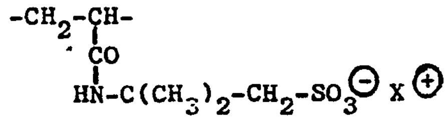

(I)

5 bis 95 Gew.% aus Resten der Formel II

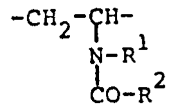

(II)

und zu 0 bis 80 Gew.% aus Resten der Formel III

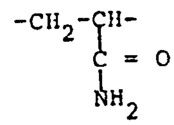

(III)

besteht, wobei

$R^1$ und $R^2$ gleich oder verschieden sind und Wasserstoff, Methyl oder Äthyl und

$X^{\oplus}$ ein Kation bedeuten, und seine Herstellung. Das erfindungsgemäße Copolymerisat ist hervorragend geeignet als Bohrspülzusatz.

Besonders wertvolle erfindungsgemäße Copolymerisate bestehen in statistischer Verteilung zu 40-80 Gew.% aus Resten der Formel I, 10-30 Gew.% aus Resten der Formel II und zu 0-60 Gew.% aus Resten der Formel III.

Das Kation $X^{\oplus}$ kann sich prinzipiell von jeder wasserlöslichen bekannten Base ableiten, deren Stärke ausreicht, die Sulfogruppen der erfindungsgemäßen Copolymere zu neutralisieren und die die Wasserlöslichkeit der Copolymeren nicht beeinträchtigt. Die Auswahl kann somit in einfacher bekannter Weise erfolgen.

Zweckmäßigerweise bedeutet jedoch $X^{\oplus}$ ein Alkalikation insbesondere ein Natrium- oder Kaliumkation oder ein Kation der Formel $HN^{\oplus}R_3^3$, wobei die drei Reste $R^3$ gleich oder verschieden sind und für Wasserstoff, Alkyl mit 1 bis 4 C-Atomen oder Hydroxyäthyl stehen.

Sofern die Produkte als Hilfsmittel für das feststofffreie Bohren eingesetzt werden sollen, ist $X^{\oplus}$ in der Regel vorzugsweise ein Natrium- oder Kaliumkation.

Die Herstellung wasserlöslicher Polymerisate, welche Sulfonsäuregruppen im Makromolekül eingebaut enthalten, ist bereits in zahlreichen Patenten sowie in der Fachliteratur ausführlich beschrieben worden. So ist z. B. die Synthese von Copolymeren der Vinylsulfonsäure mit Acrylamid und Vinylpyrrolidon im J. Polymer Sci., *38*, 147 (1959) veröffentlicht worden.

Im DE-C-1 101 760 ist ein Verfahren zur Herstellung wasserlöslicher Copolymerisate aus Vinylsulfonsäure und Acrylnitril bzw. Methacrylnitril gegebenenfalls im Gemisch mit weiteren äthylenisch ungesättigten Verbindungen beschrieben worden. Copolymerisate aus Vinyl bzw. Alkylsulfonaten mit Acrylamid und Vinylamiden sind z. B. in der DE-B-2 444 108 beschrieben worden.

Wasserlösliche Copolymerisate, welche 2-Acrylamido-2-methyl-propansulfonsäure-(3), im Folgenden mit AMPS abgekürzt, als Comonomeres enthalten, sind in US-A-3 953 342, 3 768 565, DE-A-2 502 012, 2 547 773, US-A-3 907 927, 3 926 718, 3 948 783 beschrieben. So lassen sich z. B. gemäß den Angaben des US-A-3 929 741, Beispiel 10, Copolymere aus Vinylpyrrolidon und AMPS herstellen.

Wenn man unter analogen Bedingungen die Copolymerisation von AMPS mit nicht ringgeschlossenen N-Vinylamiden der allgemeinen Formel

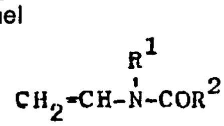

durchführt, so tritt jedoch keine Polymerisation zu wasserlöslichen Produkten ein.

Mit den bekannten Methoden war es daher nicht möglich die erfindungsgemäßen neuen wasserlöslichen Copolymerisate, die sowohl AMPS als auch nicht ringgeschlossene N-Vinylacylamide einpolymerisiert enthalten, herzustellen.

Die Herstellung der erfindungsgemäßen wasserlöslichen Copolymerisate gelingt jedoch wenn man zur Herstellung von je 100 Gewichtsteilen des Copolymerisats 5 bis 95 Gewichtsteile 2-Acrylamido-2-methyl-propansulfonsäure-(3) der Formel Ia

$$CH_2 = CH—CO—NH—C(CH_3)_2—CH_2—SO_3H \quad (Ia)$$

in Wasser oder einem wassermischbaren organischen Lösungsmittel löst, durch Zusatz einer Base die Sulfosäure neutralisiert, danach 5 bis 95 Gewichtsteile eines Vinylacylamids der Formel IIa

$$CH_2=CH-\overset{R^1}{\overset{|}{N}}-CO-R^2 \quad (IIa)$$

worin $R^1$ und $R^2$ gleich oder verschieden sind und Wasserstoff, Methyl oder Äthyl bedeuten und 0 bis 80 Gewichtsteile Acrylamid zufügt und die Copolymerisation in an sich bekannter Weise einleitet und bei 10 bis 120 °C durchführt.

Bevorzugte erfindungsgemäße Copolymerisate werden erhalten, wenn zur Herstellung von je 100 Gewichtsteilen des Copolymerisats 30-70 Gewichtsteile 2-Acrylamido-2-methyl-proponsulfonsäure-(3) der Formel Ia, 10-30 Gewichtsteile des Vinylacylamids der Formel IIa und 0-60 Gewichtsteile Acrylamid eingesetzt werden.

Als wassermischbare organische Lösungsmittel, die zur Durchführung des erfindungsgemäßen Herstellungsverfahrens geeignet sind, kommen insbesondere wasserlösliche Alkanole, nämlich solche mit 1 bis 4 C-Atomen, wie Methanol, Äthanol, Propanol, Isopropanol, n-, sec- und iso-Butanol vorzugsweise aber tert. Butanol in Betracht.

Der Wassergehalt der als Lösungsmittel eingesetzten niederen Alkanole sollte 6 Gewichts% nicht überschreiten, da sonst eine Klumpenbildung bei der Polymerisation auftreten kann. Vorzugsweise wird bei einem Wassergehalt von 0-3 % gearbeitet.

Die Menge des einzusetzenden Lösungsmittels richtet sich bis zu einem gewissen Grad nach der Art der eingesetzten Comonomeren.

In der Regel werden pro 100 g Gesamtmonomere 200 bis 1 000 g des Lösungsmittels eingesetzt.

Die zur Neutralisation der 2-Acrylamido-2-methylpropan-sulfonsäure-(3) eingesetzte Base wird zweckmäßigerweise so gewählt, daß sie das gewünschte Kation $X^{\oplus}$ liefert. Man setzt daher als Base üblicherweise ein Alkalisalz einer schwachen Säure, ein Alkalihydroxid oder eine Verbindung der Formel $NR_3^3$ ein, wobei die drei Reste $R^3$ gleich oder verschieden sind und für Wasserstoff, Alkyl mit 1 bis 4 C-Atomen oder Hydroxyäthyl stehen.

In der Regel wird als Base ein Natrium- oder Kalimsalz einer schwachen Säure, Natriumhydroxid oder Kaliumhydroxid bevorzugt, wenn die Produkte als Hilfsmittel für das feststofffreie Bohren eingesetzt werden sollen.

Wie üblich wird die Polymerisation in einer Schutzgasatmosphäre, vorzugsweise unter Stickstoff, ausgeführt. Die Polymerisationstemperatur liegt zwischen 10 und 120 °C, vorzugsweise 40 bis 80 °C.

Zur Auslösung der Polymerisation können energiereiche elektromagnetische Strahlen oder die üblichen Polymerisationsinitiatoren herangezogen werden, z. B. organische Peroxide, wie Benzoylperoxid, tert. Butyl-hydroperoxid, Methyl-äthyl-keton peroxid, Cumol-hydroperoxid, Azoverbindungen wie Azo-di-iso-butyro-nitril sowie anorganische Peroxiverbindungen wie $(NH_4)_2S_2O_8$ oder $K_2S_2O_8$ oder $H_2O_2$ gegebenenfalls in Kombination mit Reduktionsmitteln wie Natriumhydrogensulfit, oder Redoxsysteme, welche als reduzierende Komponente aliphatische und aromatische Sulfinsäuren, wie Benzolsulfinsäure und Toluolsulfinsäure oder Derivate dieser Säuren enthalten, wie z. B. Mannichaddukte aus Sulfinsäuren, Aldehyden und Aminoverbindungen, wie sie in der Deutschen Patentschrift 1 301 566 beschrieben sind. Pro 100 g Gesamtmonomeren werden in der Regel 0,05 bis 2 g des Polymerisationsinitiators eingesetzt.

Bei der Verwendung von Wasser als Lösungsmittel für die Durchführung des erfindungsgemäßen Herstellungsverfahrens verläuft die Polymerisation unter den Bedingungen der Lösungspolymerisation, und es wird eine viskose wässrige Lösung des erfindungsgemäßen Copolymerisats erhalten, aus der das Produkt durch Abdestillieren des Wassers oder Ausfällung durch Mischen der Lösung mit einem wassermischbaren organischen Lösungsmittel, wie Methanol, Äthanol, Aceton oder dergleichen isoliert werden kann. Vorzugsweise wird jedoch die erhaltene wässrige Lösung direkt, evtl. nach Einstellen einer gewünschten Konzentration, der bestimmungsgemäßen Verwendung zugeführt.

Bei der Durchführung der Copolymerisation in den genannten organischen Lösungsmitteln, vorzugsweise in tert. Butanol, arbeitet man unter den Bedingungen der Fällungspolymerisation. Hierbei fällt das Polymerisat direkt in fester Form an und kann durch Abdestillieren des Lösungsmittels oder Absaugen und Trocknen isoliert werden.

Die erfindungsgemäßen Copolymerisate sind hervorragend geeignet als Hilfsmittel bei Bohrspülungen. Sie zeigen dabei eine sehr gute Schutzkolloidwirkung sowohl bei hohen Temperaturen als auch bei hohen Elektrolytkonzentrationen und sind insbesondere im Hinblick auf Elektrolytstabilität. und

Alterungsbeständigkeit den nächstvergleichbaren aus der US-A-2 775 557 und den DE-B-1 300 481 und 2 444 108 bekannten Bohrspülzusätzen erheblich überlegen.

Zur Formulierung von wässrigen Bohrspülungen werden die erfindungsgemäßen Mischpolymerisate in Konzentrationen von 0,5 bis 40 kg/m$^3$ vorzugsweise 3-30 kg/m$^3$ eingesetzt. Die wässrigen Bohrspülungen enthalten zur Viskositätserhöhung und Abdichtung durchbohrter Formationen vorwiegend Bentonite. Zur Dichteerhöhung der Bohrschlämme werden Schwerspat, Kreide und Eisenoxide zugesetzt.

Bentonit, Schwerspat, Kreide und Eisenoxid können allein oder in den verschiedensten Mischungsverhältnissen den Bohrspülungen zugegeben werden. Der begrenzende Faktor nach oben sind die rheologischen Eigenschaften der Bohrschlämme.

Die Herstellung der erfindungsgemäßen Polymerisate wird durch die folgenden Beispiele veranschaulicht.

## Beispiel 1

In einem Polymerisationskolben von 2 l Inhalt, ausgestattet mit Rührer, Rückflußkühler, Tropftrichter, Gaseinleitungsrohr und elektrisch beheiztem Wasserbad werden 600 ml tert. Butanol vorgelegt und darin 65 g AMPS unter Rühren suspendiert, dann werden 7,1 l $NH_3$-Gas eingeleitet und anschließend 15 g Acrylamid und 20 g N-Vinyl-N-methylacetamid zugegeben. Unter Einleiten von Stickstoff wird mit dem elektrischen Wasserbad das Reaktionsgemisch auf 50 °C geheizt und 1,0 g Azoisobutyronitril zugesetzt. Nach einer Induktionszeit von ca. 2 Stunden setzt die Polymerisation ein, die Reaktionstemperatur steigt bis auf 69 °C an und das Polamerisat fällt aus. Es wird noch 2 Stunden bei 80 °C nachgeheizt, wobei eine dickflüssige Suspension entsteht. Das Polymere kann durch Absaugen und Trocknen unter Vakuum bei 50 °C isoliert werden. Es kann jedoch auch das Lösungsmittel direkt unter vermindertem Druck aus dem Reaktionsgemisch abdestilliert werden. Man erhält das Polymere in Form eines weißen leichten Pulvers, das sich in Wasser gut löst. K-Wert nach Fikentscher 170.

Gemäß dieser Verfahrensweise können auch die Copolymerisate der Tabelle I hergestellt werden.

In den Tabellen I und II haben die Abkürzungen die folgenden Bedeutungen :

AM : Acrylamid
VMA : N-Vinyl-N-methyl-acetamid
AMPS : 2-Acrylamido-2-methyl-propansulfonsäure-(3) wobei die Hochzahl
1 das $NH_4$-Salz
2 das Dimethyl-β-hydroxyäthylammoniumsalz
3 das K-Salz
4 das Na-Salz bedeutet
VA : Vinylacetamid
VF : Vinylformamid
In der Spalte « Katalysatoren » bedeuten
A : Ammoniumperoxidisulfat
B : Ammoniumperoxidisulfat + Dibutylammoniumchlorid +

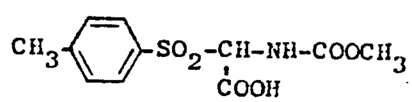

C : Azoisobutyronitril.

Tabelle 1

| Nr. | K-Wert | Monomerenzusammensetzung AM | VMA | AMPS | VA | VF | Weitere Zusätze (auf Ges.-Mon.) | Katalys. | Reaktions-medium |
|---|---|---|---|---|---|---|---|---|---|
| 2 | 210 | 15 | 20 | $65^{1}$ | | | | C | tert. Butanol |
| 3 | 192 | 15 | 30 | $55^{1}$ | | | | C | tert. Butanol |
| 4 | 153 | 65 | 30 | $5^{1}$ | | | | C | tert. Butanol |
| 5 | 163 | 60 | 30 | $10^{1}$ | | | | C | tert. Butanol |
| 6 | 184 | 55 | 30 | $15^{1}$ | | | | C | tert. Butanol |

Tabelle 1 (Fortsetzung)

| Nr. | K-Wert | Monomerenzusammensetzung AM | VMA | AMPS | VA | VF | Weitere Zusätze (auf Ges.-Mon.) | Katalys. | Reaktions-medium |
|---|---|---|---|---|---|---|---|---|---|
| 7 | 159 | 55 | 40 | 5[1] | | | | C | tert. Butanol |
| 8 | 171 | 50 | 40 | 10[1] | | | | C | tert. Butanol |
| 9 | 180 | 45 | 40 | 15[1] | | | | C | tert. Butanol |
| 10 | 166 | 45 | 40 | 15[1] | | | | C | tert. Butanol |
| 11 | > 100 | 15 | 20 | 65[2] | | | | C | tert. Butanol |
| 12 | 168 | 15 | 20 | 65[1] | | | | C | tert. Butanol |
| 13 | 495 | 55 | 40 | 5[1] | | | 0,5 % Allylzucker-äther | C | tert. Butanol |
| 14 | ~ 520 | 15 | 20 | 65[1] | | | 0,5 % Allylzucker-äther | C | tert. Butanol |
| 15 | — | 15 | 20 | 65[1] | | | 2 % Stearylpropy-lendiamin | C | tert.-Butanol |
| 16 | 203 | 25 | 20 | 55[1] | | | | C | tert. Butanol |
| 17 | 211 | 22,7 | 27,3 | 50[1] | | | | C | tert. Butanol |
| 18 | 207,5 | 15 | 40 | 45[1] | | | | C | tert. Butanol |
| 19 | 204,5 | 25 | 30 | 45[1] | | | | C | tert. Butanol |
| 20 | 209 | 35 | 20 | 45[1] | | | | C | tert. Butanol |
| 21 | 205,5 | 35 | 30 | 35[1] | | | | C | tert. Butanol |
| 22 | 206 | 25 | 40 | 35[1] | | | | C | tert. Butanol |
| 23 | 199 | 15 | 50 | 35[1] | | | | C | tert. Butanol |
| 24 | 199 | 45 | 20 | 35[1] | | | | C | tert. Butanol |
| 25 | 202 | | 35 | 65[1] | | | | C | tert. Butanol |
| 26 | 192 | | 50 | 50[1] | | | | C | tert. Butanol |
| 27 | 190 | | 20 | 80[1] | | | | C | tert. Butanol |
| 28 | 177 | | 10 | 90[1] | | | | C | tert. Butanol |
| 29 | 191 | 15 | | 65[1] | | 20 | | C | tert. Butanol |
| 30 | 202 | 15 | | 65[1] | 20 | | | C | tert. Butanol |
| 31 | 219 | | | 65[1] | 35 | | | C | tert. Butanol |
| 32 | 194 | | | 65[1] | | 35 | | C | tert. Butanol |

Beispiel 33

In der im Beispiel 1 beschriebenen Apparatur werden 200 ml wasser entionisiert vorgelegt und 28 ml

wässrige Ammoniaklösung 25 %ig zugegeben, dann werden 65 g AMPS unter Rühren und Einleiten eines schwachen $N_2$ Stromes eingetragen, nach dem eine klare Lösung entstanden ist, werden noch 15 g Acylamid und 20 g N-Vinyl-N-methylacetamid zugegeben. Der pH-Wert der Lösung beträgt 8,0. Bei 23 °C wird die Polymerisation durch Zugabe von 10 ml einer 0,5 %igen wässerigen Ammoniumperoxydisulfat-Lösung initiiert. Nach einer Induktionsperiode von ca. 40 Min. setzt die Polymerisation ein, die Temperatur steigt bis auf 42 °C an, und das Reaktionsgemisch wird viskos. Es wird noch 2 Std. nachgeheizt bei 80 °C.

Man erhält eine klare, hochviskose Lösung mit einem K-Wert von 250 nach Fikentscher, welche direkt der Verwendung als Bohrspülzusatz zugeführt werden kann.

In analoger Weise können auch die in der folgenden Tabelle zusammengestellten Copolymerisate synthetisiert werden.

Tabelle II

| | | Monomerenzusammensetzung | | | | | | |
|---|---|---|---|---|---|---|---|---|
| Nr. | K-Wert | AM | VMA | AMPS | VA | VF | Katalys. | Reaktionsmedium |
| 34 | > 100 | 65 | 30 | $5^4$ | | | B | Wasser |
| 35 | > 100 | 60 | 30 | $10^4$ | | | B | Wasser |
| 36 | > 100 | 55 | 30 | $15^4$ | | | B | Wasser |
| 37 | 265,5 | 15 | 20 | $65^1$ | | | A | Wasser |
| 38 | 504 | 15 | 20 | $65^1$ | | | C | Wasser |
| 39 | 509 | 15 | 20 | $65^1$ | | | C | Wasser |
| 40 | 498 | 15 | 20 | $65^1$ | | | A | Wasser |
| 41 | 223 | | 50 | $50^1$ | | | C | Wasser |
| 42 | 232 | | 45,5 | $54{,}5^1$ | | | C | Wasser |
| 43 | 192 | | 10 | $90^1$ | | | $H_2O_2$ | Wasser |
| 44 | 142,5 | | 35 | $65^1$ | | | $H_2O_2$ | Wasser |
| 45 | 120 | | 50 | $50^1$ | | | $H_2O_2$ | Wasser |
| 46 | 135,5 | | 20 | $80^1$ | | | $H_2O_2$ | Wasser |
| 47 | 363 | | | $58{,}3^1$ | 41,7 | | C | Wasser |
| 48 | 390 | | | $62{,}6^1$ | | 37,4 | C | Wasser |

In den nachfolgenden Beispielen werden erfindungsgemäße Mischpolymerisate mit bekannten Bohrspüladditiven in verschiedenen Bohrspülungen bei Normaltemperatur und nach einer Alterung von 15 Stunden bei 200 °C verglichen.

Als Maß für die Beständigkeit der mit verschiedenen Additiven hergestellten Bohrschlämme dient ihre Filtrierbarkeit nach American Petroleum Industry Code 29. Die Güte der Bohrschlämme und damit die Wirkung der Additive wird nach dem « Wasserverlust » bei dem Filtrierversuch beurteilt. Unter Wasserverlust ist hierbei die Menge Wasser zu verstehen, welche durch eine genannte Filterpresse in einer bestimmten Zeiteinheit (30 Minuten) bei einem bestimmten vorgegebenen Druck von 6,86 bar hindurchläuft. Je geringer die hindurchlaufende Wassermenge ist, um so besser ist die Beständigkeit der Bohrspülung. Die Prüfungen werden bei Raumtemperatur durchgeführt.

Für die Untersuchungen wurden folgende Additive verwendet :

V. Mischpolymerisat (erfindungsgemäß) bestehend aus 65 Gew.% AMPS, 20 Gew.% N-Vinyl-N-Methylacetamid, 15 Gew.% Acrylamid

W. Mischpolymerisat (erfindungsgemäß) bestehend aus 80 Gew.% AMPS, 20 Gew.% N-Vinyl-N-Methylacetamid

X. Mischpolymerisat bestehend aus Natriumacrylat, Acrylamid nach US-A-2 775 557, Beispiel 2, Produkt Nr. 5 (Vergleichsprodukt)

Y. Mischpolymerisat bestehend aus 45 Gew.% Natriumvinylsulfonat, 55 Gew.% N-Vinyl-N-Methylacetamid nach DE-B-1 300 481

Z. Mischpolymerisat bestehend aus 20 Gew.% Natriumvinylsulfonat, 70 Gew.% Acrylamid, 10 Gew.% N-Vinylpyrrolidon nach DAS 2 444 108.

Prüfbedingungen

Beispiel 1

Proben von Spülungen mit einem Gehalt von 4 Gew.% Bentonit und praktisch elektrolytfreiem Wasser sowie eines Bohrschlamms mit 25 Gew.% Natriumchlorid und 1 Gew.% Gips werden jeweils 1 Gew.% der Additive V bis Z zugesetzt. Die praktisch elektrolytfreie Spülung hat ohne Zusatz einen Wasserverlust von 24 $cm^3$ und der Bohrschlamm mit 25 Gew.% Natriumchlorid und 1 Gew.% Gips von 63 $cm^3$. Es wurden die Wasserverluste nach API bei Normalbedingungen (20 °C) und nach einer Lagerung von 15 Stunden bei 200 °C gemessen. Die Ergebnisse sind in Tabelle I enthalten.

Beispiel 2

Proben einer Spülung mit einem Gehalt von 4 Gew.% Bentonit sowie 10 Gew.% Natriumchlorid und 10 Gew.% Kalziumchlorid werden jeweils 2 Gew.% der Additive V-Z zugesetzt. Der Wasserverlust des Bohrschlamms ohne Additive beträgt 72 $cm^3$. Es wird gemäß Beispiel 1 geprüft. Die Ergebnisse sind in Tabelle II enthalten.

Prüfergebnisse

Tabelle I

| Additive | Wasserverlust nach APT in $cm^3$ bei Normalbedingungen a | b | nach Alterung a | b |
|---|---|---|---|---|
| V | 8,5 | 9,0 | 8,8 | 10,4 |
| W | 8,3 | 6,6 | 9,1 | 8,1 |
| X | 9,0 | 8,8 | 9,2 | 46 |
| Y | 9,2 | 14,0 | 12,0 | 44 |
| Z | 8,9 | 7,4 | 9,3 | 30 |

a) Spülungen mit praktisch elektrolytfreiem Wasser
b) Spülungen mit 25 Gew.% Natriumchlorid und 1 Gew.% Gips.

Tabelle II

| Additive | Wasserverlust nach APT in $cm^3$ bei Normalbedingungen | nach Alterung |
|---|---|---|
| V | 4,8 | 5,5 |
| W | 4,5 | 5,4 |
| X | 100 | 100 |
| Y | 8,5 | 21,6 |
| Z | 27 | 100 |

Die Prüfungsergebnisse zeigen die Überlegenheit der erfindungsgemäßen Verbindungen V und W gegenüber den bisher bekannten hochtemperaturbeständigen Bohrspüladditiven X, Y und Z. Die Tabelle I demonstriert die annähernde Gleichwertigkeit in Bohrspülungen auf Basis von praktisch elektrolytfreiem Wasser. In salinen Bohrschlämmen zeigt sich klar die höhere Effektivität von V und W. Besonders groß ist die Überlegenheit der erfindungsgemäßen Mischpolymerisate V und W, wenn die Bohrspülungen wie im Beispiel 2 neben Natriumchlorid noch Kalziumchlorid enthalten. Die Verbindungen X und Z versagen

dabei aufgrund ihrer Empfindlichkeit gegenüber Kalziumionen, während das Copolymerisat Y nicht die Effektivität der erfindungsgemäßen Mischpolymerisate V und W erreicht.

**Ansprüche** (für die Vertragsstaaten : DE, FR, GB, IT, NL, SE)

1. Wasserlösliches Copolymerisat, das in statistischer Verteilung zu 5 bis 95 Gew.% aus Resten der Formel I

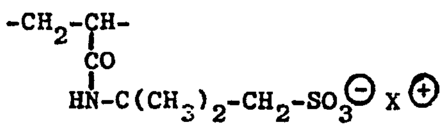

(I)

und 5 bis 95 Gew.% aus Resten der Formel II

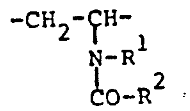

(II)

und zu 0 bis 80 Gew.% aus Resten der Formel III

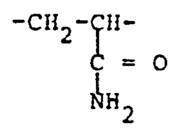

(III)

besteht, wobei

$R^1$ und $R^2$ gleich oder verschieden sind und Wasserstoff, Methyl oder Äthyl und

$X^{\oplus}$ ein Kation bedeuten.

2. Wasserlösliches Copolymerisat gemäß Anspruch 1, dadurch gekennzeichnet, daß es in statistischer Verteilung zu

40-80 Gew.% aus Resten der Formel I,
10-30 Gew.% aus Resten der Formel II und
0-60 Gew.% aus Resten der Formel III

besteht.

3. Wasserlösliches Copolymerisat gemäß Anspruch 1, dadurch gekennzeichnet, daß $X^{\oplus}$ ein Natrium- oder Kaliumkation oder ein Kation der Formel $HN^{\oplus}R_3^3$ bedeutet, wobei die drei Reste $R^3$ gleich oder verschieden sind und für Wasserstoff, Alkyl mit 1 bis 4 C-Atomen oder Hydroxyäthyl stehen.

4. Wasserlösliches Copolymerisat gemäß Anspruch 1, dadurch gekennzeichnet, daß $X^{\oplus}$ ein Natrium- oder Kaliumkation bedeutet.

5. Verfahren zur Herstellung eines wasserlöslichen Copolymerisats der im Anspruch 1 angegebenen Zusammensetzung durch Copolymerisation olefinisch ungesättigter Monomerer von denen eines eine Sulfogruppe aufweist in Gegenwart von Radikalbildnern als Starter in einem geeigneten Lösungs- oder Dispergiermittel, dadurch gekennzeichnet, daß zur Herstellung von je 100 Gewichststeilen des Copolymerisats 5 bis 95 Gewichtsteile 2-Acrylamido-2-methyl-propansulfonsäure-(3) der Formel Ia

$$CH_2 = CH—CO—NH—C(CH_3)_2—CH_2—SO_3H \qquad \text{(Ia)}$$

in Wasser oder einem wassermischbaren organischen Lösungsmittel gelöst werden, durch Zusatz einer Base die Sulfosäure neutralisiert wird, danach 5 bis 95 Gewichtsteile eines Vinylacylamids der Formel IIa

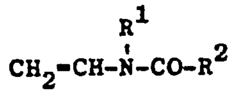

worin $R^1$ und $R^2$ gleich oder verschieden sind und Wasserstoff, Methyl oder Äthyl bedeuten und 0 bis 80 Gewichtsteile Acrylamid zugefügt werden und die Copolymerisation in an sich bekannter Weise eingeleitet und bei 10 bis 120 °C durchgeführt wird.

6. Verfahren gemäß Anspruch 5, dadurch gekennzeichnet, daß zur Herstellung von je 100 Gewichtsteilen des Copolymerisats

40-80 Gewichtsteile 2-Acrylamido-2-methyl-propansulfonsäure-(3) der Formel Ia
10-30 Gewichtsteile des Vinylacylamids der Formel IIa und
0-60 Gewichtsteile Acrylamid

eingesetzt werden.

7. Verfahren gemäß Anspruch 5, dadurch gekennzeichnet, daß die zur Neutralisation der Sulfosäure eingesetzte Base ein Alkalisalz einer schwachen Säure, ein Alkalihydroxid oder eine Base der Formel $NR_3^3$ ist, wobei die drei Reste $R^3$ gleich oder verschieden sind und für Wasserstoff, Alkyl mit 1 bis 4 C-Atomen oder Hydroxyäthyl stehen.

8. Verfahren gemäß Anspruch 5, dadurch gekennzeichnet, daß die zur Neutralisation der Sulfosäure eingesetzte Base ein Natrium- oder Kaliumsalz einer schwachen Säure oder Natrium- oder Kaliumhydroxid ist.

9. Verfahren gemäß Anspruch 5, dadurch gekennzeichnet, daß als Lösungsmittel Wasser oder tert. Butanol eingesetzt wird.

10. Verwendung der in Anspruch 1 definierten wasserlöslichen Copolymerisate als Bohrspülungshilfsmittel.

**Ansprüche** (für den Vertragsstaat AT)

1. Verfahren zur Herstellung eines wasserlöslichen Copolymerisats, das in statistischer Verteilung zu

5 bis 95 Gew.% aus Resten der Formel I

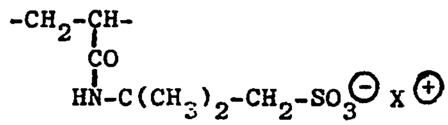

(I)

und 5 bis 95 Gew.% aus Resten der Formel II

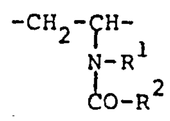

(II)

und zu 0 bis 80 Gew.% aus Resten der Formel III

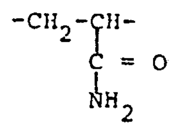

(III)

besteht, wobei $R^1$ und $R^2$ gleich oder verschieden sind und Wasserstoff, Methyl oder Äthyl und $X^{\oplus}$ ein Kation bedeuten, durch Copolymerisation olefinisch ungesättigter Monomerer, von denen eines eine Sulfogruppe aufweist in Gegenwart von Radikalbildnern als Starter in einem geeigneten Lösungs- oder Dispergiermittel, dadurch gekennzeichnet, daß zur Herstellung von je 100 Gewichtsteilen des Copolymerisats 5 bis 95 Gewichtsteile 2-Acrylamido-2-methylpropansulfonsäure-(3) der Formel Ia

$$CH_2=CH—CO—NH—C(CH_3)_2—CH_2—SO_3H$$

in Wasser oder einem wassermischbaren organischen Lösungsmittel gelöst werden, durch Zusatz einer Base die Sulfosäure neutralisiert wird, danach 5 bis 95 Gewichtsteile eines Vinylacylamids der Formel IIa

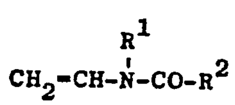

worin $R^1$ und $R^2$ gleich oder verschieden sind und Wasserstoff, Methyl oder Äthyl bedeuten und 0 bis 80

Gewichtsteile Acrylamid zugefügt werden und die Copolymerisation in an sich bekannter Weise eingeleitet und bei 10 bis 120 °C durchgeführt wird.

2. Verfahren nach Anspruch 1, dadurch gekennzeichnet, daß zur Herstellung von je 100 Gewichtsteilen des Copolymerisats 40 bis 80 Gewichtsteile 2-Acrylamido-2-methyl-propansulfonsäure-(3) der Formel Ia, 10 bis 30 Gewichtsteile des Vinylacylamids der Formel IIa und 0 bis 60 Gewichtsteile Acrylamid eingesetzt werden.

3. Verfahren nach den Ansprüchen 1 oder 2, dadurch gekennzeichnet, daß die zur Neutralisation der Sulfosäure eingesetzte Base ein Alkalisalz einer schwachen Säure, ein Alkalihydroxid oder eine Base der Formel $NR_3^3$ ist, wobei die drei Reste $R^3$ gleich oder verschieden sind und für Wasserstoff, Alkyl mit 1 bis 4 C-Atomen oder Hydroxyäthyl stehen.

4. Verfahren nach den Ansprüchen 1 bis 3, dadurch gekennzeichnet, daß die zur Neutralisation der Sulfosäure eingesetzte Base ein Natrium- oder Kaliumsalz einer schwachen Säure oder Natrium- oder Kaliumhydroxid ist.

5. Verfahren nach den Ansprüchen 1 bis 4, dadurch gekennzeichnet, daß als Lösungsmittel Wasser oder tert. Butanol eingesetzt wird.

6. Verwendung der nach dem Verfahren der Ansprüche 1 bis 5 hergestellten wasserlöslichen Copolymerisate als Bohrspülungshilfsmittel.

**Claims** (for the Contracting States : DE, FR, GB, IT, NL, SE)

1. Water-soluble copolymer which consists, in random distribution, of radicals of the formula I

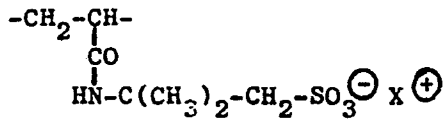

(I)

to the extent of 5 to 95 % by weight, of radicals of the formula II

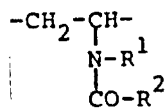

(II)

to the extent of 5 to 95 % by weight, and of radicals of the formula III

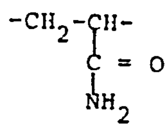

(III)

to the extent of 0 to 80 % by weight,
wherein

$R^1$ and $R^2$ are identical or different and denote hydrogen, methyl or ethyl and

$X^{\oplus}$ denotes a cation.

2. Water-soluble copolymer according to Claim 1, characterised in that it consists, in random distribution, of radicals of the formula I to the extent of

40-80 % by weight, of radicals of the formula II to the extent of
10-30 % by weight and of radicals of the formula III to the extent of
0-60 % by weight.

3. Water-soluble copolymer according to Claim 1, characterised in that $X^{\oplus}$ denotes a sodium cation or potassium cation or a cation of the formula $NH^{\oplus}R_3^3$, wherein the three radicals $R^3$ are identical or different and represent hydrogen, alkyl with 1 to 4 C atoms or hydroxyethyl.

4. Water-soluble copolymer according to Claim 1, characterised in that $X^{\oplus}$ denotes a sodium cation or potassium cation.

5. Process for the preparation of a water-soluble copolymer of the composition indicated in Claim 1 by copolymerisation of olefinically unsaturated monomers, one of which contains a sulpho group, in the presence of agents which form free radicals, as initiators, in a suitable solvent or dispersing agent, characterised in that, for the preparation of every 100 parts by weight of the copolymer, 5 to 95 parts by weight of 2-acrylamido-2-methyl-propane-3-sulphonic acid of the formula Ia

$$CH_2{=}CH{-}CO{-}NH{-}C(CH_3)_2{-}CH_2{-}SO_3H \quad (Ia)$$

are dissolved in water or a water miscible organic solvent, the sulphonic acid is neutralised by adding a base, 5 to 95 parts by weight of a vinylacylamide of the formula IIa

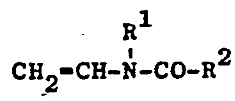

wherein $R^1$ and $R^2$ are identical or different and denote hydrogen, methyl or ethyl, and 0 to 80 parts by weight of acrylamide are then added and in a manner which is in itself known, the copolymerisation is initiated and carried out at 10 to 120 °C.

6. Process according to Claim 5, characterised in that

40-80 parts by weight of 2-acrylamide-2-methyl-propane-3-sulphonic acid of the formula Ia,
10-30 parts by weight of the vinylacylamide of the formula IIa and
0-60 parts by weight of acrylamide

are used for the preparation of every 100 parts by weight of the copolymer.

7. Process according to Claim 5, characterised in that the base employed for neutralising the sulphonic acid is an alkali metal salt of a weak acid, an alkali metal hydroxide or a base of the formula $NR^3_3$, wherein the three radicals $R^3$ are identical or different and represent hydrogen, alkyl with 1 to 4 C atoms or hydroxyethyl.

8. Process according to Claim 5, characterised in that the base used for neutralising the sulphonic acid is a sodium salt or potassium salt of a weak acid or sodium hydroxide or potassium hydroxide.

9. Process according to Claim 5, characterised in that water or tert.-butanol is used as the solvent.

10. Use of the water-soluble copolymers defined in Claim 1, as drilling mud auxiliaries.

**Claims** (for the Contracting State AT)

1. Process for the preparation of a water-soluble copolymer which consists, in random distribution, of radicals of the formula I

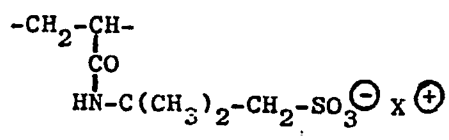

(I)

to the extent of 5 to 95 % by weight, of radicals of the formula II

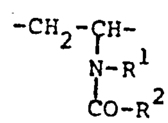

(II)

to the extent of 5 to 95 % by weight, and of radicals of the formula III

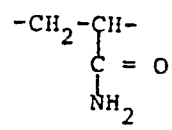

(III)

to the extent of 0 to 80 % by weight, wherein $R^1$ and $R^2$ are identical or different and denote hydrogen, methyl or ethyl and $X^{\oplus}$ denotes a cation, of olefinically unsaturated monomers, one of which contains a sulpho group, in the presence of agents which form free radicals, as initiators, in a suitable solvent or dispersing agent, characterised in that, for the preparation of every 100 parts by weight of the copolymer, 5 to 95 parts by weight of 2-acrylamido-2-methyl-propane-3-sulphonic acid of the formula Ia

$$CH_2{=}CH{-}CO{-}NH{-}C(CH_3)_2{-}CH_2{-}SO_3H \qquad \text{(Ia)}$$

are dissolved in water or a water miscible organic solvent, the sulphonic acid is neutralised by adding a base, 5 to 95 parts by weight of a vinylacylamide of the formula IIa

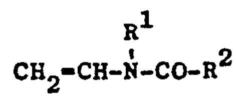

wherein $R_1$ and $R_2$ are identical or different and denote hydrogen, methyl or ethyl, and 0 to 80 parts by weight of acrylamide are then added and, in a manner which is in itself known, the copolymerisation is initiated and carried out at 10 to 120 °C.

2. Process according to Claim 1, characterised in that 40-80 parts by weight of 2-acrylamide-2-methylpropane-3-sulphonic acid of the formula Ia, 10-30 parts by weight of the vinylacylamide of the formula IIa and 0-60 parts by weight of acrylamide are used for the preparation of every 100 parts by weight of the copolymer.

3. Process according to Claim 1 or 2, characterised in that the base employed for neutralising the sulphonic acid is an alkali metal salt of a weak acid, an alkali metal hydroxide or a base of the formula $NR_3^3$, wherein the three radicals $R^3$ are identical or different and represent hydrogen, alkyl with 1 to 4 C atoms or hydroxyethyl.

4. Process according to Claims 1 to 3, characterised in that the base used for neutralising the sulphonic acid is a sodium salt or potassium salt of a weak acid or sodium hydroxide or potassium hydroxide.

5. Process according to Claims 1 to 4, characterised in that the solvent used is water or tert. butanol.

6. Use of the water-soluble copolymers prepared by the process of Claims 1 to 5 as drilling mud auxiliaries.

**Revendications** (pour les Etats contractants : DE, FR, GB, IT, NL, SE)

1. Copolymère hydrosoluble qui a une répartition statistique des comonomères et qui est constitué pour 5 à 95 % en poids de radicaux de formule (I)

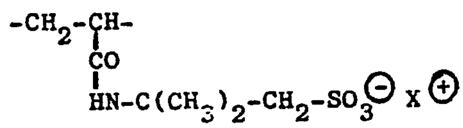

(I)

pour 5 à 95 % en poids de radicaux de formule (II)

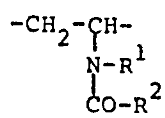

(II)

et pour 0 à 80 % en poids de radicaux de formule (III)

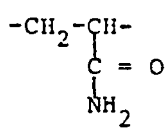

(III)

formules dans lesquelles

$R^1$ et $R^2$ représentent chacun, indépendamment l'un de l'autre, l'hydrogène ou un radical méthyle ou éthyle et

$X^{\oplus}$ représente un cation.

2. Copolymère hydrosoluble selon la revendication 1, caractérisé en ce qu'il a une distribution statistique des comonomères et qu'il est constitué :

de 40 à 80 % en poids de radicaux de formule (I)
de 10 à 30 % en poids de radicaux de formule (II) et
de 0 à 60 % en poids de radicaux de formule (III).

3. Copolymère hydrosoluble selon la revendication 1 caractérisé en ce que $X^{\oplus}$ représente un cation de sodium ou de potassium ou un cation répondant à la formule $HN^{\oplus}R_3^3$ dans laquelle les trois symboles $R^3$ représentent chacun, indépendamment les uns des autres, l'hydrogène, un alkyle contenant de 1 à 4 atomes de carbone ou un hydroxyéthyle.

4. Copolymère hydrosoluble selon la revendication 1, caractérisé en ce que $X^{\oplus}$ représente un cation de sodium ou de potassium.

5. Procédé de préparation d'un copolymère hydrosoluble ayant la composition indiquée à la revendication 1, par copolymérisation de monomères éthyléniques dont l'un porte un groupe sulfo, en présence de générateurs de radicaux jouant le rôle d'amorceurs, dans un milieu solvant ou dispersant approprié, procédé caractérisé en ce que, pour préparer 100 parties en poids du copolymère, on dissout de 5 à 95 parties en poids d'acide acryloylamino-2 méthyl-2 propane-sulfonique-3, corps qui répond à la formule (Ia)

$$CH_2=CH—CO—NH—C(CH_3)_2—CH_2SO_3H \qquad \text{(Ia)}$$

dans de l'eau ou dans un solvant organique miscible à l'eau, on neutralise l'acide sulfonique par addition d'une base, puis on ajoute de 5 à 95 parties en poids d'un vinyl-acylamide répondant à la formule (IIa)

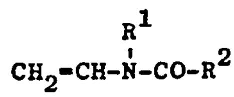

dans laquelle $R^1$ et $R^2$ représentent chacun, indépendamment l'un de l'autre, l'hydrogène ou un radical méthyle ou éthyle, et de 0 à 80 parties en poids d'acrylamide, on amorce la copolymérisation de manière connue et on l'effectue à une température de 10 à 120 °C.

6. Procédé selon la revendication 5, caractérisé en ce que, pour préparer 100 parties en poids du copolymère, on utilise :

de 40 à 80 parties en poids de l'acide acryloylamino-2 méthyl-2 propane-sulfonique-3 de formule (Ia)

de 10 à 30 parties en poids d'un vinyl-acylamide de formule (IIa), et

de 0 à 60 parties en poids de l'acrylamide.

7. Procédé selon la revendication 5, caractérisé en ce que la base utilisée pour neutraliser l'acide sulfonique est un sel de métal alcalin d'un acide faible, un hydroxyde de métal alcalin ou une base répondant à la formule $NR_3^3$ dans laquelle les trois symboles $R^3$ représentent chacun, indépendamment les uns des autres, l'hydrogène, un alkyle contenant de 1 à 4 atomes de carbone ou un hydroxyéthyle.

8. Procédé selon la revendication 5 caractérisé en ce que la base utilisée pour neutraliser l'acide sulfonique est un sel sodique ou potassique d'un acide faible ou l'hydroxyde de sodium ou de potassium.

9. Procédé selon la revendication 5, caractérisé en ce qu'on utilise, comme solvant, l'eau ou le butanol tertiaire.

10. Application des copolymères hydrosolubles définis à la revendication 1 comme adjuvants pour liquides de forage.

**Revendications** (pour l'Etat contractant AT)

1. Procédé de préparation d'un copolymère hydrosoluble dont les comonomères ont une distribution statistique et qui est constitué

pour 5 à 95 % en poids de radicaux de formule (I)

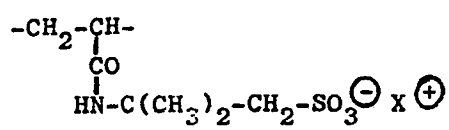
(I)

pour 5 à 95 % en poids de radicaux de formule (II)

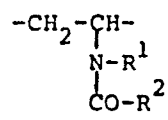
(II)

et pour 0 à 80 % en poids de radicaux de formule (III)

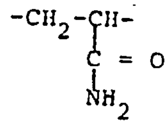
(III)

formules dans lesquelles $R^1$ et $R^2$ représentent chacun, indépendamment l'un de l'autre, l'hydrogène ou un radical méthyle ou éthyle et $X^{\oplus}$ représente un cation, par copolymérisation de monomères éthyléniques dont l'un porte un groupe sulfo, en présence de générateurs de radicaux agissant comme amorceurs, dans un milieu solvant ou dispersant approprié, procédé caractérisé en ce que, pour préparer 100 parties en poids de copolymère, on dissout de 5 à 95 parties en poids d'acide acryloylamino-2 méthyl-2 propane-sulfonique-3, corps qui répond à la formule (Ia)

$$CH_2 = CH—CO—NH—C(CH_3)_2—CH_2SO_3H \qquad (Ia)$$

dans de l'eau ou dans un solvant organique miscible à l'eau, on neutralise l'acide sulfonique par addition d'une base, puis on ajoute de 5 à 95 parties en poids d'un vinyl-acylamide répondant à la formule (IIa)

$$\begin{array}{c} \qquad\quad R^1 \\ \qquad\quad | \\ CH_2=CH-N-CO-R^2 \end{array}$$

dans laquelle $R^1$ et $R^2$ représentent chacun, indépendamment l'un de l'autre, l'hydrogène ou un radical méthyle ou éthyle, et de 0 à 80 parties en poids d'acrylamide, on amorce la copolymérisation de manière connue et on l'effectue à une température comprise entre 10 à 120 °C.

2. Procédé selon la revendication 1, caractérisé en ce que, pour préparer 100 parties en poids du copolymère, on utilise de 40 à 80 parties en poids de l'acide acryloylamino-2 méthyl-2 propane-sulfonique-3 de formule (Ia), de 10 à 30 parties en poids du vinyl-acylamide de formule (IIa) et de 0 à 60 parties en poids d'acrylamide.

3. Procédé selon l'une des revendications 1 et 2, caractérisé en ce que la base utilisée pour la neutralisation de l'acide sulfonique est un sel de métal alcalin d'un acide faible, un hydroxyde de métal alcalin ou une base répondant à la formule $NR_3^3$ dans laquelle les trois symboles $R^3$ représentent chacun, indépendamment les uns des autres, l'hydrogène, un alkyle contenant de 1 à 4 atomes de carbone ou un hydroxy-éthyle.

4. Procédé selon l'une quelconque des revendications 1 à 3, caractérisé en ce que la base utilisée pour la neutralisation de l'acide sulfonique est un sel sodique ou potassique d'un acide faible ou l'hydroxyde de sodium ou de potassium.

5. Procédé selon l'une quelconque des revendications 1 à 4, caractérisé en ce qu'on utilise comme solvant l'eau ou le butanol tertiaire.

6. Application des copolymères hydrosolubles qui ont été préparés par le procédé des revendications 1 à 5 comme adjuvant pour liquides de forage.